# EUROPEAN PATENT APPLICATION

(11) **EP 2 672 399 A1**
(43) Date of publication of application: **11.12.2013**
(21) Application number: 13169062.0
(22) Date of filing: 24.05.2013
(51) Int. Cl.: G06F 17/30

(54) **Methods, apparatuses and computer program products for enabling modification of content delivered to mobile browsers**

(30) Priority: 04.06.2012 US 201213487801
(71) Applicant: Nokia Corporation, 02150 Espoo (FI)
(72) Inventor: Werwath, James, Mount Prospect, IL Illinois 60056 (US); Buczak, Piotr, Des Plaines, IL Illinois 60016 (US)
(74) Representative: Nokia Corporation

(57) **Abstract**

An apparatus for enabling customization of content provided to a browser may include a processor and memory storing executable computer code causing the apparatus to at least perform operations including receiving a request for Web content from a communication device. The computer program code may further cause the apparatus to determine one or more add-ons assigned to an identified user of the communication device responsive to receipt of the request. The computer program code may further cause the apparatus to execute at least one of the add-ons, responsive to receipt of the Web content, which modifies the Web content on behalf of the communication device. The computer program code may further cause the apparatus to provide the modified Web content to a browser of the communication device. Corresponding methods and computer program products are also provided.

## Description

### TECHNOLOGICAL FIELD

An example embodiment of the invention relates generally to wireless communication technology and more particularly, relates to a method, apparatus, and computer program product for facilitating user defined content modification via browsers of communication devices.

### BACKGROUND

The modem communications era has brought about a tremendous expansion of wireline and wireless networks. Computer networks, television networks, and telephony networks are experiencing an unprecedented technological expansion, fueled by consumer demand. Wireless and mobile networking technologies have addressed related consumer demands, while providing more flexibility and immediacy of information transfer.

Current and future networking technologies continue to facilitate ease of information transfer and convenience to users. Due to the now ubiquitous nature of electronic communication devices, people of all ages and education levels are utilizing electronic devices to communicate with other individuals or contacts, receive services and/or share information, media and other content. One area in which there is a demand to increase ease of information transfer relates to delivery of services to a user of a mobile terminal. The services may be in the form of a particular media or communication application desired by the user, such as a music player, a game player, an electronic book, short messages, email, content sharing, etc. The services may also be in the form of interactive content, applications or the like in which the user may respond to a network device in order to perform a task or achieve a goal.

In some instances, users may desire to enhance and customize the interaction of a mobile browsing experience via their mobile terminal. For example, users may desire to customize their mobile browsing experience by using add-ons and extensions of content associated with Web pages. However, many mobile terminals that are not smart devices lack the resources (e.g., memory, processing capacity, etc.) to efficiently run scripts (e.g., JavaScript) and cookies, etc. used in Web pages to enhance the mobile browsing experience of the user.

As such, currently users of many mobile terminals, that are not smart devices, typically have little or no way to customize the content that is delivered to mobile browsers of their mobile terminals.

This may be a drawback to users of many mobile terminals since the users may be unsatisfied by their mobile browsing experiences and may be unable to adapt or customize the content that is delivered to the mobile browsers of their mobile terminals.

In view of the foregoing drawbacks, it may be beneficial to provide an efficient and reliable mechanism of enabling customization of content delivered to browsers of mobile terminals to enhance a user's mobile browsing experience.

### BRIEF SUMMARY

A method, apparatus and computer program product are therefore provided for enabling customization of content delivered to mobile browsers of communication devices. In this regard, an example embodiment may provide a framework that enables users to create user defined content and customize or adapt content for delivery to their mobile browsers.

An example embodiment may utilize a network device (e.g., a server (e.g., a proxy server)) to execute scripts (e.g., JavaScript), cookies, Hypertext Transfer Protocol (HTTP) information or the like on behalf of the communication devices to enable a user to customize their mobile browsing experience. In this regard, an example embodiment may enable customization of content delivered to a browser (e.g., a mobile browser) via one or more add-ons or extensions associated with the content (e.g., Web content).

In one example embodiment, a method for enabling customization of content provisioned to a browser is provided. The method may include receiving a request for Web content from a communication device. The method may also include determining one or more add-ons assigned to an identified user of the communication device in response to receipt of the request. The method may also include executing at least one of the add-ons, in response to receipt of the Web content, which modifies the Web content on behalf of the communication device. The method may also include enabling provision of the modified Web content to a browser of the communication device.

In another example embodiment, an apparatus for enabling customization of content provisioned to a browser is provided. The apparatus may include a processor and a memory including computer program code. The memory and computer program code are configured to, with the processor, cause the apparatus to at least perform operations including receiving a request for Web content from a communication device. The memory and computer program code are further configured to, with the processor, cause the apparatus to determine one or more add-ons assigned to an identified user of the communication device in response to receipt of the request. The memory and computer program code are further configured to, with the processor, cause the apparatus to execute at least one of the add-ons, in response to receipt of the Web content, which modifies the Web content on behalf of the communication device. The memory and computer program code are further configured to, with the processor, cause the apparatus to enable provision of the modified Web content to a browser of the communication device.

In another example embodiment, a computer program product for enabling customization of content provisioned to a browser is provided. The computer program product includes at least one computer-readable storage medium having computer-readable program code portions stored therein. The computer-executable program code instructions may include program code instructions configured to cause receipt of a request for Web content from a communication device. The program code instructions may also be configured to determine one or more add-ons assigned to an identified user of the communication device in response to receipt of the request. The program code instructions may also be configured to execute at least one of the add-ons, in response to receipt of the Web content, which modifies the Web content on behalf of the communication device. The program code instructions may also be configured to enable provision of the modified Web content to a browser of the communication device.

An example embodiment of the invention may provide a better user experience by providing a framework that may adapt or customize content in a way that may enhance the mobile browsing experience of users. As a result, device users may enjoy improved capabilities with respect to browser services accessible via the device.

### BRIEF DESCRIPTION OF THE SEVERAL VIEWS OF THE DRAWINGS

Having thus described the invention in general terms, reference will now be made to the accompanying drawings, which are not necessarily drawn to scale, and wherein:
FIG. 1 is a schematic block diagram of a system according to an example embodiment of the invention;
FIG. 2 is a schematic block diagram of an apparatus according to an example embodiment of the invention;
FIG. 3 is a schematic block diagram of a network device according to an example embodiment of the invention;
FIG. 4 is a schematic block diagram of a network entity according to an example embodiment of the invention;
FIG. 5 is a block diagram of a system according to an example embodiment of the invention; and
FIG. 6 illustrates a flowchart for enabling customization of content provided to a browser of an apparatus according to an example embodiment of the invention.

### DETAILED DESCRIPTION

Some embodiments of the present invention will now be described more fully hereinafter with reference to the accompanying drawings, in which some, but not all embodiments of the invention are shown. Indeed, various embodiments of the invention may be embodied in many different forms and should not be construed as limited to the embodiments set forth herein. Like reference numerals refer to like elements throughout. As used herein, the terms "data," "content," "information" and similar terms may be used interchangeably to refer to data capable of being transmitted, received and/or stored in accordance with embodiments of the present invention. Moreover, the term "exemplary", as used herein, is not provided to convey any qualitative assessment, but instead merely to convey an illustration of an example. Thus, use of any such terms should not be taken to limit the spirit and scope of embodiments of the present invention.

Additionally, as used herein, the term `circuitry' refers to (a) hardware-only circuit implementations (e.g., implementations in analog circuitry and/or digital circuitry); (b) combinations of circuits and computer program product(s) comprising software and/or firmware instructions stored on one or more computer readable memories that work together to cause an apparatus to perform one or more functions described herein; and (c) circuits, such as, for example, a microprocessor(s) or a portion of a microprocessor(s), that require software or firmware for operation even if the software or firmware is not physically present. This definition of `circuitry' applies to all uses of this term herein, including in any claims. As a further example, as used herein, the term 'circuitry' also includes an implementation comprising one or more processors and/or portion(s) thereof and accompanying software and/or firmware. As another example, the term `circuitry' as used herein also includes, for example, a baseband integrated circuit or applications processor integrated circuit for a mobile phone or a similar integrated circuit in a server, a cellular network device, other network device, and/or other computing device.

As defined herein a "computer-readable storage medium," which refers to a non-transitory, physical or tangible storage medium (e.g., volatile or non-volatile memory device), may be differentiated from a "computer-readable transmission medium," which refers to an electromagnetic signal.

As referred to herein, add-ons, extensions, plug-ins and similar terms may be used interchangeably to refer to programs that may be executed to provide additional functionality to content (e.g., Web content) that may be utilized by a browser(s). The browser(s) may include, but is not limited to, a mobile browser or any other suitable Web browser (e.g., a desktop browser, etc.).

An example embodiment may facilitate user defined content modification for browsers and customization of the content (e.g., Web content) delivered to the browser(s) of a communication device. In this regard, a network device (e.g., a server) may execute add-ons and/or extensions associated with requested content (e.g., Web content (e.g., a Web page). The add-ons and/or extensions may be executed on the network device (e.g. the server) on behalf of a communication device. Users of communication devices may decide what type of modifications they desire to receive regarding requested content by selecting particular add-ons. Additionally, users may utilize a browser of a communication device to search for add-ons and may add (e.g., enable) or delete (e.g., disable) add-ons. Additionally, an example embodiment may provide a manner for extensions to be upgraded automatically or based on permission of a user(s) in a manner analogous to application stores on communication devices.

Unlike conventional desktop browsers, an example embodiment facilities storage and execution of add-ons (e.g., JavaScript files) on a network device (e.g., a server (e.g., a proxy server)) that supports a browser (e.g., a mobile browser) of a communication device (e.g. a mobile device). The network device may provide the browser of the communication device modified content (e.g., modified Web content) in response to executing an add-on(s). In addition to executing or implementing JavaScript, an example embodiment may be configured to change cascading style sheets (CSS), to change HTTP headers, to include location information, to change cookies and to modify content with other language constructs such as, for example, regular expressions.

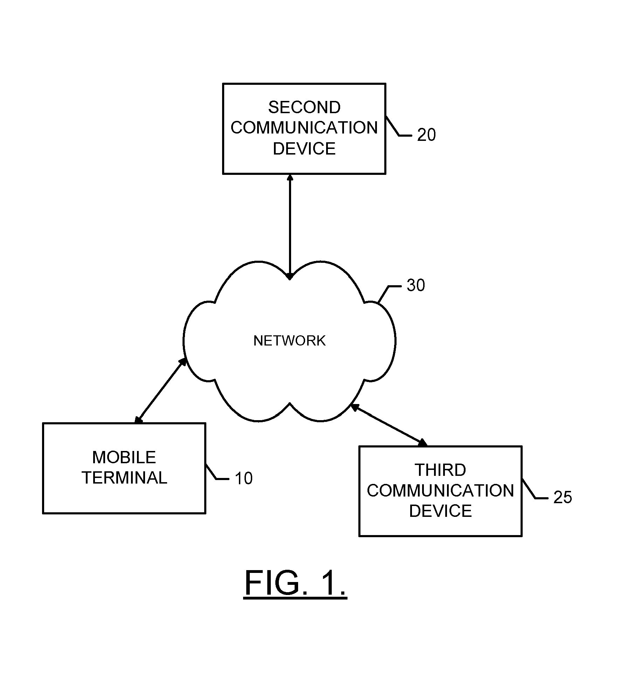

FIG. 1 illustrates a generic system diagram in which a device such as a mobile terminal 10 is shown in an example communication environment. As shown in FIG. 1, an embodiment of a system in accordance with an example embodiment of the invention may include a first communication device (e.g., mobile terminal 10) and a second communication device 20 capable of communication with each other via a network 30. In some cases, an embodiment of the present invention may further include one or more additional communication devices, one of which is depicted in FIG. 1 as a third communication device 25. In one embodiment, not all systems that employ an embodiment of the present invention may comprise all the devices illustrated and/or described herein. While an embodiment of the mobile terminal 10 and/or second and third communication devices 20 and 25 may be illustrated and hereinafter described for purposes of example, other types of terminals, such as portable digital assistants (PDAs), pagers, mobile televisions, mobile telephones, gaming devices, laptop computers, cameras, video recorders, audio/video players, radios, global positioning system (GPS) devices, Bluetooth headsets, Universal Serial Bus (USB) devices or any combination of the aforementioned, and other types of voice and text communications systems, can readily employ an embodiment of the present invention. Furthermore, devices that are not mobile, such as servers and personal computers may also readily employ an embodiment of the present invention.

The network 30 may include a collection of various different nodes (of which the second and third communication devices 20 and 25 may be examples), devices or functions that may be in communication with each other via corresponding wired and/or wireless interfaces. As such, the illustration of FIG. 1 should be understood to be an example of a broad view of certain elements of the system and not an all-inclusive or detailed view of the system or the network 30. Although not necessary, in one embodiment, the network 30 may be capable of supporting communication in accordance with any one or more of a number of First-Generation (1G), Second-Generation (2G), 2.5G, Third-Generation (3G), 3.5G, 3.9G, Fourth-Generation (4G) mobile communication protocols, Long Term Evolution (LTE) or Evolved Universal Terrestrial Radio Access Network (E-UTRAN), Self Optimizing/Organizing Network (SON) intra-LTE, inter-Radio Access Technology (RAT) Network and/or the like. In one embodiment, the network 30 may be a point-to-point (P2P) network.

One or more communication terminals such as the mobile terminal 10 and the second and third communication devices 20 and 25 may be in communication with each other via the network 30 and each may include an antenna or antennas for transmitting signals to and for receiving signals from one or more base sites. The base sites could be, for example one or more base stations (BS) that is a part of one or more cellular or mobile networks or one or more access points (APs) that may be coupled to a data network, such as a Local Area Network (LAN), Wireless Local Area Network (WLAN), a Metropolitan Area Network (MAN), and/or a Wide Area Network (WAN), such as the Internet. In turn, other devices such as processing elements (e.g., personal computers, server computers or the like) may be coupled to the mobile terminal 10 and the second and third communication devices 20 and 25 via the network 30. By directly or indirectly connecting the mobile terminal 10 and the second and third communication devices 20 and 25 (and/or other devices) to the network 30, the mobile terminal 10 and the second and third communication devices 20 and 25 may be enabled to communicate with the other devices or each other. For example, the mobile terminal 10 and the second and third communication devices 20 and 25 as well as other devices may communicate according to numerous communication protocols including Hypertext Transfer Protocol (HTTP) and/or the like, to thereby carry out various communication or other functions of the mobile terminal 10 and the second and third communication devices 20 and 25, respectively.

Furthermore, although not shown in FIG. 1, the mobile terminal 10 and the second and third communication devices 20 and 25 may communicate in accordance with, for example, radio frequency (RF), near field communication (NFC), Bluetooth (BT), Infrared (IR) or any of a number of different wireline or wireless communication techniques, including Local Area Network (LAN), Wireless LAN (WLAN), Worldwide Interoperability for Microwave Access (WiMAX), Wireless Fidelity (Wi-Fi), Ultra-Wide Band (UWB), Wibree techniques and/or the like. As such, the mobile terminal 10 and the second and third communication devices 20 and 25 may be enabled to communicate with the network 30 and each other by any of numerous different access mechanisms. For example, mobile access mechanisms such as Wideband Code Division Multiple Access (W-CDMA), CDMA2000, Global System for Mobile communications (GSM), General Packet Radio Service (GPRS) and/or the like may be supported as well as wireless access mechanisms such as WLAN, WiMAX, and/or the like and fixed access mechanisms such as Digital Subscriber Line (DSL), cable modems, Ethernet and/or the like.

In an example embodiment, the first communication device (e.g., the mobile terminal 10) may be a mobile communication device such as, for example, a wireless telephone or other devices such as a personal digital assistant (PDA), mobile computing device, camera, video recorder, audio/video player, positioning device, game device, television device, radio device, or various other like devices or combinations thereof. The second communication device 20 and the third communication device 25 may be mobile or fixed communication devices. However, in one example, the second communication device 20 and the third communication device 25 may be servers, remote computers or terminals such as personal computers (PCs) or laptop computers.

In an example embodiment, the network 30 may be an ad hoc or distributed network arranged to be a smart space. Thus, devices may enter and/or leave the network 30 and the devices of the network 30 may be capable of adjusting operations based on the entrance and/or exit of other devices to account for the addition or subtraction of respective devices or nodes and their corresponding capabilities.

In an example embodiment, the second communication device 20 may be a dedicated server (or server bank) associated with a particular information source or service (e.g., a search service (e.g., a Web search service), a media provision service, etc.) or the second communication device 20 may be a backend server (e.g., a proxy server) associated with one or more other functions or services. As such, the second communication device may represent a potential host for a plurality of different services or information sources. In one embodiment, the functionality of the second communication device 20 is provided by hardware and/or software components configured to operate in accordance with known techniques for the provision of information to users of communication devices. However, at least some of the functionality provided by the second communication device is information provided in accordance with an example embodiment of the invention.

The third communication device 25 may be a network device such as for example a server (e.g., a Web server). In this regard, the third communication device may provide content (e.g., Web content) to the second communication device 20 and/or the mobile terminal 10 in response to receipt of a request.

In one example embodiment, the second communicate device 20 may execute one or more scripts (e.g., JavaScript), cookies (e.g., cookie control information), HTTP information (e.g., HTTP header modification information) or the like to enable customization of received content (e.g., Web content) for delivery to a communication device (e.g., mobile terminal 10). The executed scripts, cookies, and/or HTTP information may provide additional functionality or features to the content via one or more add-ons and/or extensions.

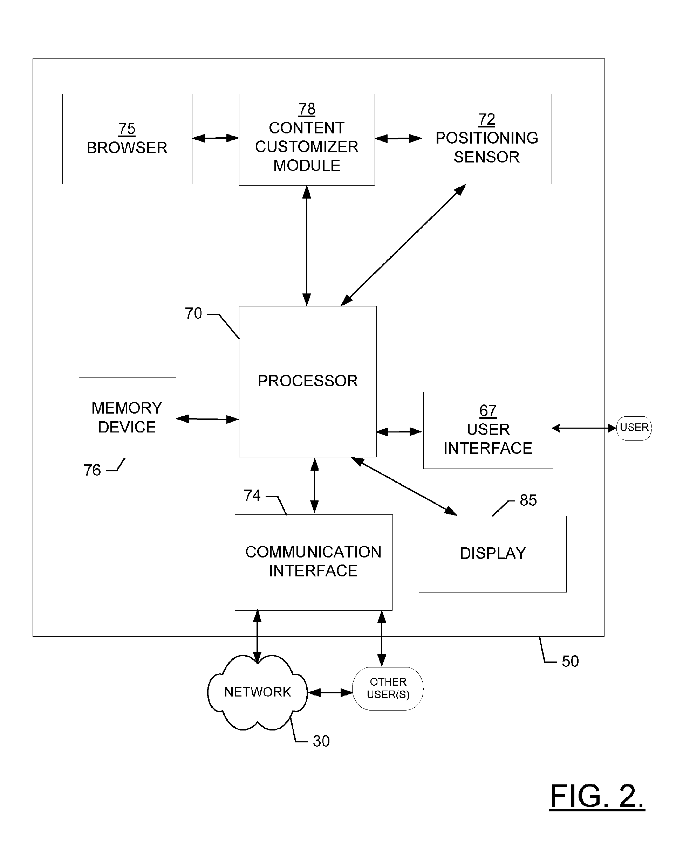

In an example embodiment, the mobile terminal 10 as well as the second and third communication devices 20 and 25 may employ an apparatus (e.g., apparatus of FIG. 2) capable of employing an embodiment of the invention.

FIG. 2 illustrates a schematic block diagram of an apparatus for enabling customization of content provided to a browser. An example embodiment of the invention will now be described with reference to FIG. 2, in which certain elements of an apparatus 50 are displayed. The apparatus 50 of FIG. 2 may be employed, for example, on the mobile terminal 10 (and/or the second communication device 20 or the third communication device 25). Alternatively, the apparatus 50 may be embodied on a network device of the network 30. However, the apparatus 50 may alternatively be embodied at a variety of other devices, both mobile and fixed (such as, for example, any of the devices listed above). In some cases, an embodiment may be employed on a combination of devices. Accordingly, one embodiment of the invention may be embodied wholly at a single device (e.g., the mobile terminal 10), by a plurality of devices in a distributed fashion (e.g., on one or a plurality of devices in a P2P network) or by devices in a client/server relationship. Furthermore, it should be noted that the devices or elements described below may not be mandatory and thus some may be omitted in a certain embodiment.

Referring now to FIG. 2, the apparatus 50 may include or otherwise be in communication with a processor 70, a user interface 67, a communication interface 74, a memory device 76, a display 85, a content customizer module 78, a positioning sensor 72 and a browser 75. In one example embodiment, the display 85 may be a touch screen display. The memory device 76 may include, for example, volatile and/or non-volatile memory. For example, the memory device 76 may be an electronic storage device (e.g., a computer readable storage medium) comprising gates configured to store data (e.g., bits) that may be retrievable by a machine (e.g., a computing device like processor 70). In an example embodiment, the memory device 76 may be a tangible memory device that is not transitory. The memory device 76 may be configured to store information, data, files, applications, instructions or the like for enabling the apparatus to carry out various functions in accordance with an example embodiment of the invention. For example, the memory device 76 could be configured to buffer input data for processing by the processor 70. Additionally or alternatively, the memory device 76 could be configured to store instructions for execution by the processor 70. As yet another alternative, the memory device 76 may be one of a plurality of databases that store information and/or media content (e.g., pictures, videos, etc.).

The apparatus 50 may, in one embodiment, be a mobile terminal (e.g., mobile terminal 10) or a fixed communication device or computing device configured to employ an example embodiment of the invention. However, in one embodiment, the apparatus 50 may be embodied as a chip or chip set. In other words, the apparatus 50 may comprise one or more physical packages (e.g., chips) including materials, components and/or wires on a structural assembly (e.g., a baseboard). The structural assembly may provide physical strength, conservation of size, and/or limitation of electrical interaction for component circuitry included thereon. The apparatus 50 may therefore, in some cases, be configured to implement an embodiment of the invention on a single chip or as a single "system on a chip." As such, in some cases, a chip or chipset may constitute means for performing one or more operations for providing the functionalities described herein. Additionally or alternatively, the chip or chipset may constitute means for enabling user interface navigation with respect to the functionalities and/or services described herein.

The processor 70 may be embodied in a number of different ways. For example, the processor 70 may be embodied as one or more of various processing means such as a coprocessor, microprocessor, a controller, a digital signal processor (DSP), processing circuitry with or without an accompanying DSP, or various other processing devices including integrated circuits such as, for example, an ASIC (application specific integrated circuit), an FPGA (field programmable gate array), a microcontroller unit (MCU), a hardware accelerator, a special-purpose computer chip, or the like. In an example embodiment, the processor 70 may be configured to execute instructions stored in the memory device 76 or otherwise accessible to the processor 70. As such, whether configured by hardware or software methods, or by a combination thereof, the processor 70 may represent an entity (e.g., physically embodied in circuitry) capable of performing operations according to an embodiment of the invention while configured accordingly. Thus, for example, when the processor 70 is embodied as an ASIC, FPGA or the like, the processor 70 may be specifically configured hardware for conducting the operations described herein. Alternatively, as another example, when the processor 70 is embodied as an executor of software instructions, the instructions may specifically configure the processor 70 to perform the algorithms and operations described herein when the instructions are executed. However, in some cases, the processor 70 may be a processor of a specific device (e.g., a mobile terminal or network device) adapted for employing an embodiment of the invention by further configuration of the processor 70 by instructions for performing the algorithms and operations described herein. The processor 70 may include, among other things, a clock, an arithmetic logic unit (ALU) and logic gates configured to support operation of the processor 70.

In an example embodiment, the processor 70 may be configured to operate a connectivity program, and/or a coprocessor or the like may execute a browser 75, Web browser or the like. In this regard, the connectivity program may enable the apparatus 50 to transmit and receive Web content, such as for example location-based content or any other suitable content, according to a Wireless Application Protocol (WAP), for example.

Meanwhile, the communication interface 74 may be any means such as a device or circuitry embodied in either hardware, a computer program product, or a combination of hardware and software that is configured to receive and/or transmit data from/to a network and/or any other device or module in communication with the apparatus 50. In this regard, the communication interface 74 may include, for example, an antenna (or multiple antennas) and supporting hardware and/or software for enabling communications with a wireless communication network (e.g., network 30). In fixed environments, the communication interface 74 may alternatively or also support wired communication. As such, the communication interface 74 may include a communication modem and/or other hardware/software for supporting communication via cable, digital subscriber line (DSL), universal serial bus (USB), Ethernet or other mechanisms.

The user interface 67 may be in communication with the processor 70 to receive an indication of a user input at the user interface 67 and/or to provide an audible, visual, mechanical or other output to the user. As such, the user interface 67 may include, for example, a keyboard, a mouse, a joystick, a display, a touch screen, a microphone, a speaker, or other input/output mechanisms. In an example embodiment in which the apparatus is embodied as a server or some other network devices, the user interface 67 may be limited, remotely located, or eliminated. The processor 70 may comprise user interface circuitry configured to control at least some functions of one or more elements of the user interface, such as, for example, a speaker, ringer, microphone, display, and/or the like. The processor 70 and/or user interface circuitry comprising the processor 70 may be configured to control one or more functions of one or more elements of the user interface through computer program instructions (e.g., software and/or firmware) stored on a memory accessible to the processor 70 (e.g., memory device 76, and/or the like).

In addition, the apparatus 50 may include a positioning sensor 72. The positioning sensor 72 may include, for example, a global positioning system (GPS) sensor, an assisted global positioning system (Assisted-GPS) sensor, a Bluetooth (BT)-GPS mouse, other GPS or positioning receivers or the like. However, in one example embodiment, the positioning sensor 72 may include a pedometer or inertial sensor. In this regard, the positioning sensor 72 may be capable of determining a location of the apparatus 50, such as, for example, longitudinal and latitudinal directions of the apparatus 50, or a position relative to a reference point such as a destination or start point. The positioning sensor 72 may also be capable of determining an altitude of the apparatus 50 and use the altitude information in determining the location of the apparatus 50. Information from the positioning sensor 72 may then be communicated to a memory (e.g., memory device 76) of the apparatus 50 or to another device (e.g., content customizer module 78) to be stored as a position history or location information. In this regard, for example, the position history may define a series of data points corresponding to positions or locations of the apparatus 50 at respective times. Various events or activities of the apparatus 50 may also be recorded in association with position history or location information provided by the positioning sensor 72.

In an example embodiment, the processor 70 may be embodied as, include or otherwise control the content customizer module. The content customizer module 78 may be any means such as a device or circuitry operating in accordance with software or otherwise embodied in hardware or a combination of hardware and software (e.g., processor 70 operating under software control, the processor 70 embodied as an ASIC or FPGA specifically configured to perform the operations described herein, or a combination thereof) thereby configuring the device or circuitry to perform the corresponding functions of the content customizer module 78, as described below. Thus, in an example in which software is employed, a device or circuitry (e.g., the processor 70 in one example) executing the software forms the structure associated with such means.

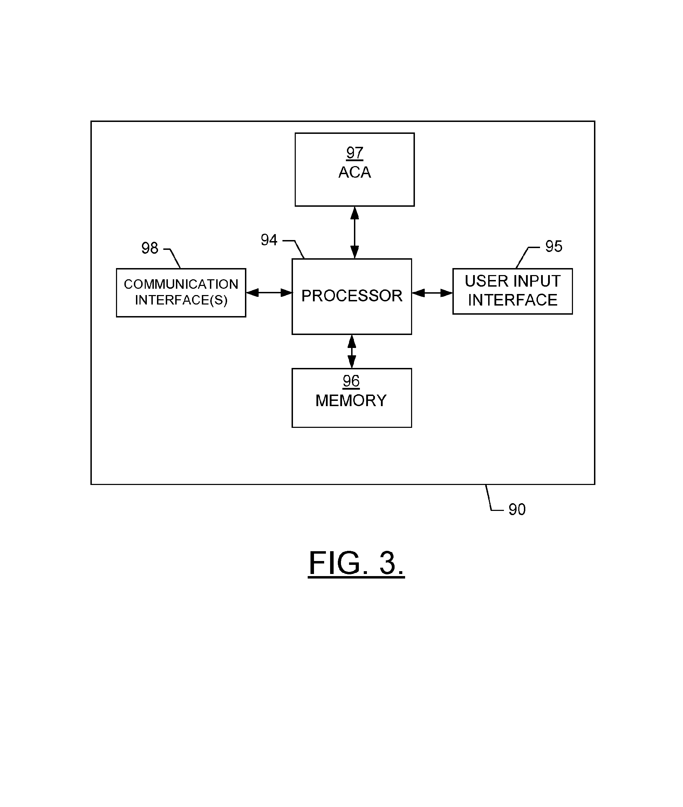

The content customizer module 78 may enable a user of apparatus 50 to designate content (e.g., Web content) for modification that is to be delivered to the browser 75 of the apparatus 50 by a network device (e.g., network device 90 of FIG. 3). In this regard, for example, a user of the apparatus 50 may utilize the user interface 67 to designate or select add-ons and/or extensions to modify requested content (e.g., Web content) to be provided to the browser 75.

The content customizer module 78 may receive indications of the designated/selected add-ons and/or extensions, for modifying content, from the user interface 67 via the processor 70. The content customizer module 78 may store the designated/selected add-ons and/or extensions, for modification of content, to a profile associated with the user of the apparatus 50. The content customizer module 78 may store the profile in a memory (e.g., memory device 76) of the apparatus 50. Additionally, or alternatively, the content customizer module 78 may provide the profile to a network device (e.g., network device 90 of FIG. 3) which may execute one or more of the add-ons and/or extensions identified as being associated with the user and may provide corresponding modified content to the browser 75, as described more fully below.

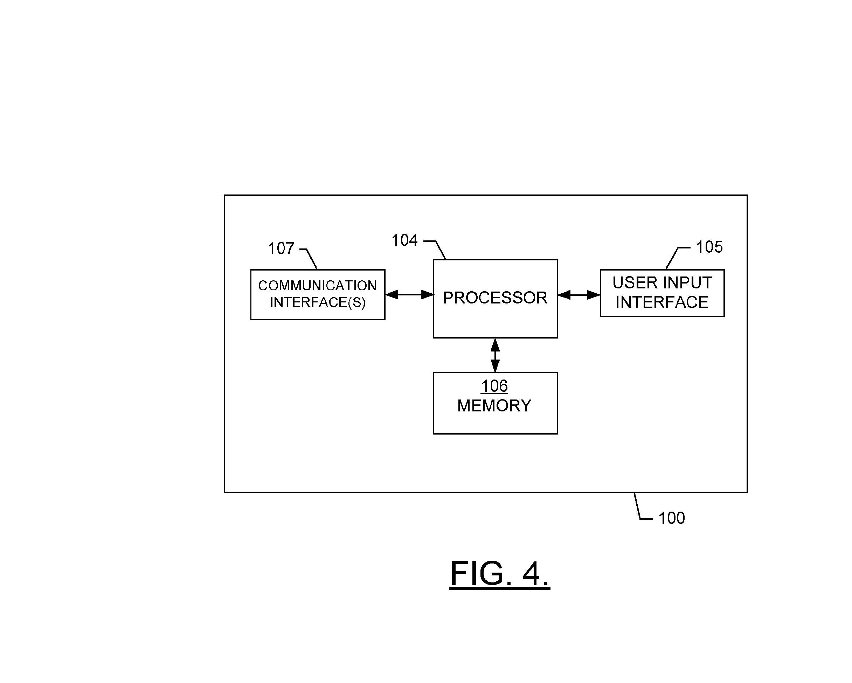

In an example embodiment, a user of apparatus 50 may utilize the user interface 67 to create one or more add-ons and/or extensions. For example, the user may utilize the user interface 67 to write a script (e.g., a computer program (e.g., JavaScript)) that adds-on to and/or modifies requested content. The created add-on(s) and/or extensions may be stored locally in a memory (e.g., memory device 76) of the apparatus 50. Additionally, or alternatively, the content customizer module 78 may provide the created add-ons and/or extensions to a network entity (e.g., network entity 100 of FIG. 4) and/or a network device (e.g., network device 90 of FIG. 3). The network entity may be a repository for storing add-ons on behalf of users, as described more fully below.

In another example embodiment, a user may write add-ons utilizing the apparatus 50 or another communication device (e.g., a computer, laptop, etc.). In this regard, in an instance in which an interface (e.g., user interface 67) is utilized by the user, the interface may be web-based, for example, the user interacting with a web page of an external network entity. In this regard, users may visit a website accessible via the apparatus 50 and may write their add-ons on the website and the external network entity (e.g., network device 90 of FIG. 3) may store, and subsequently execute, these add-ons on behalf of the users.

Referring now to FIG. 3, a block diagram of one example of a network device is provided. In an example embodiment, the network device 90 (e.g., a server (e.g., a proxy server)) may execute JavaScript, cookie control information, HTTP header modification information or the like on behalf of an apparatus (e.g., apparatus 50) to implement one or more or more add-ons and/or extensions associated with requested content and may provide modified content to a browser (e.g., browser 75) of the apparatus. The network device 90 may implement the add-ons and/or extensions in response to receipt of a request from an apparatus (e.g., apparatus 50), as described more fully below. As shown in FIG. 3, the network device (e.g., a second communication device 20) generally includes a processor 94 and an associated memory 96. The memory 96 may comprise volatile and/or non-volatile memory, and may store content, data and/or the like. For example, the memory may store content, data, information, and/or the like transmitted from, and/or received by, the network device. Also for example, the memory 96 may store client applications, instructions, and/or the like for the processor 94 to perform the various operations of the network device in accordance with an embodiment of the invention, as described herein. In an example embodiment, the memory 96 may store one or more add-ons (e.g., JavaScript files), extensions, plug-ins or the like. In addition, the memory 96 may store one or more script libraries that provide a designated storage facility such that one or more user preferences and data may be stored with one or more corresponding scripts.

In addition to the memory 96, the processor 94 may also be connected to at least one interface or other means for displaying, transmitting and/or receiving data, content, and/or the like. In this regard, the interface(s) may comprise at least one communication interface 98 or other means for transmitting and/or receiving data, content, and/or the like, as well as at least one user input interface 95. The user input interface 95, in turn, may comprise any of a number of devices allowing the network device to receive data from a user, such as a keypad, a touch display, a joystick or other input device. In this regard, the processor 94 may comprise user interface circuitry configured to control at least some functions of one or more elements of the user input interface. The processor and/or user interface circuitry of the processor may be configured to control one or more functions of one or more elements of the user interface through computer program instructions (e.g., software and/or firmware) stored on a memory accessible to the processor (e.g., volatile memory, non-volatile memory, and/or the like).

The network device 90 may, in one embodiment, be a computing device configured to employ an example embodiment of the invention. However, in one embodiment, the network device 90 may be embodied as a chip or chip set. In this regard, the network device 90 may comprise one or more physical packages (e.g., chips) including materials, components and/or wires on a structural assembly (e.g., a baseboard). The structural assembly may provide physical strength, conservation of size, and/or limitation of electrical interaction for component circuitry included thereon. The network device 90 may therefore, in some cases, be configured to implement an embodiment of the invention on a single chip or as a single "system on a chip." As such, in some cases, a chip or chipset may constitute means for performing one or more operations for providing the functionalities described herein. Additionally or alternatively, the chip or chipset may constitute means for enabling user interface navigation with respect to the functionalities and/or services described herein.

The processor 94 may be embodied in a variety of different ways. For example, the processor 94 may be embodied as one or more of various processing means such as a coprocessor, microprocessor, a controller, a DSP, processing circuitry with or without an accompanying DSP, or various other processing devices including integrated circuits such as, for example, an ASIC, an FPGA, a microcontroller unit, a hardware accelerator, a special-purpose computer chip, or the like. In an example embodiment, the processor 94 may be configured to execute instructions stored in the memory 96 or otherwise accessible to the processor 94. As such, whether configured by hardware or software methods, or by a combination thereof, the processor 94 may represent an entity (e.g., physically embodied in circuitry) capable of performing operations according to an embodiment of the invention while configured accordingly. Thus, for example, when the processor 94 is embodied as an ASIC, FPGA or the like, the processor 94 may be specifically configured hardware for conducting the operations described herein. Alternatively, as another example, when the processor 94 is embodied as an executor of software instructions, the instructions may specifically configure the processor 94 to perform the algorithms and operations described herein when the instructions are executed.

In an example embodiment, the processor 94 may be embodied as, include or otherwise control an adaptive content accelerator (ACA) 97. The ACA 97 may be any means such as a device or circuitry operating in accordance with software or otherwise embodied in hardware or a combination of hardware and software (e.g., processor 94 operating under software control, the processor 94 embodied as an ASIC or FPGA specifically configured to perform the operations described herein, or a combination thereof) thereby configuring the device or circuitry to perform the corresponding functions of the ACA 97, as described below. Thus, in an example in which software is employed, a device or circuitry (e.g., the processor 94 in one example) executing the software forms the structure associated with such means.

The ACA 97 may receive a request from the browser 75 of apparatus 50 for content (e.g., Web content). In response to receipt of the request, the ACA 97 may analyze data of the request and information of a profile(s) to determine a user of the apparatus sending the request. The information of the profile specifying one or more designated or chosen add-ons/extensions associated with the user of the apparatus 50 may be previously provided by the content customizer module 78 to the ACA 97 or alternatively may be provided in the request to the ACA 97. Additionally, the request may include information requesting content (e.g., Web content (e.g., a Web page)) from a network (e.g., the Internet). In this regard, the ACA 97 may determine one or more add-ons and/or extensions that are identified in the profile(s) as being associated with the user. In one example embodiment, the add-ons and/or extensions may be stored in a memory (e.g., memory 96) of the network device 90 and/or in a memory (e.g., memory 106 of FIG. 4) of a remote device (e.g., network entity 100 of FIG. 4). In an alternative example embodiment, the add-ons and/or extensions associated with the user of the apparatus 50 may be provided to the ACA 97 in the request. In response to determining an add-on(s) and/or extension(s) associated with a user, the ACA 97 may send a request for the content requested by the user to another network device (e.g., a server (e.g., third communication device 25)). In response to receipt of the requested content from the other network device (e.g., a server (e.g., third communication device 25)), the ACA 97 may execute the corresponding add-on(s) (e.g., a JavaScript add-on(s) file(s)) and/or extension(s) on behalf of the apparatus 50. In this regard, the ACA 97 may provide the requested content (e.g., Web content) and the modified content associated with execution of the add-on(s) and/or the extension(s) to the apparatus 50 (e.g., to the browser 75 of apparatus 50). The modified content may be content that extends one or more features and/or functions of the requested content (e.g., Web content (e.g., a Web page)), as described more fully below. As such, in one example embodiment, the ACA 97 may serve as a distributed execution environment for browsers (e.g., mobile browsers) by executing scripts associated with content (e.g., Web content) requested by a user.

In one example embodiment, the network device 90 may receive one or more add-ons, extensions, plug-ins or the like on behalf of users from a network entity (e.g., network entity 100 of FIG. 4) as described more fully below.

Referring now to FIG. 4, a block diagram of an example embodiment of a network entity is provided. As shown in FIG. 4, the network entity (e.g., a server) generally includes a processor 104 and an associated memory 106. The memory 106 may comprise volatile and/or non-volatile memory, and may store content, data and/or the like. The memory 106 may store client applications, instructions, and/or the like for the processor 104 to perform the various operations of the network entity 100 (also referred to herein as add-on repository 100). In addition, the memory 106 may store one or more add-ons, extensions, plug-ins or the like.

The processor 104 may also be connected to at least one communication interface 107 or other means for displaying, transmitting and/or receiving data, content, and/or the like. The user input interface 105 may comprise any of a number of devices allowing the network entity 100 to receive data from a user, such as a keypad, a touch display, a joystick or other input device. In this regard, the processor 104 may comprise user interface circuitry configured to control at least some functions of one or more elements of the user input interface. The processor 104 and/or user interface circuitry of the processor may be configured to control one or more functions of one or more elements of the user interface through computer program instructions (e.g., software and/or firmware) stored on a memory accessible to the processor (e.g., volatile memory, non-volatile memory, and/or the like).

The network entity 100 may receive one or more add-ons from one or more apparatuses 50 of users. The add-ons (e.g., JavaScript) may, but need not, be chosen or designated by the users of the apparatuses 50. In an example embodiment, the processor 104 may associate respective add-ons with profiles of corresponding users. For instance, the processor 104 may associate add-ons received from an apparatus 50 of a user with a profile(s) of the user and may include information in the profile(s) specifying that the add-on(s) is to be executed in an instance in which a request for content (e.g., Web content (e.g., a uniform resource identifier (URI))) associated with the add-on(s) is received or detected by a device (e.g., network device 90). In another example embodiment, at least a subset of the add-ons may be designated, by the processor 104, for usage on behalf of one or more users requesting the add-on(s) to be associated with a profile of the respective users.

In one example embodiment, the network entity 100 may send one or more add-ons stored on behalf of users to the network device 90 in response to receipt of a request from the network device 90. In this regard, the network device 90 may execute one or more add-ons determined to be associated with a respective user(s) in response to receipt of a request from an apparatus 50 for content (e.g., Web content, (e.g., a Web page associated with an URI)) associated with the add-on(s).

In one example embodiment, network device 90 may receive additional data in the requests received from one or more apparatuses 50. The additional data received in the requests may include, but is not limited to location data indicating a location of a corresponding apparatus 50, a type of a corresponding apparatus 50 (e.g., a type/model of a mobile phone), a carrier of communication services (e.g., a cellular/data operator) of the corresponding apparatus 50 and data indicating one or more languages associated with the corresponding apparatus 50. The language data may be based in part on the location of a corresponding apparatus 50. For purposes of illustration and not of limitation, in an instance in which the location information indicates that a corresponding apparatus 50 is in a foreign country (e.g., France), the language data may correspond to one or more languages (e.g., French) spoken by a majority of the people in the foreign country. In an example embodiment, the ACA 97 may automatically associate one or more add-ons to profiles of users on the basis of the identified location data, the type of the corresponding apparatus 50, the carrier of the corresponding apparatus 50 and the language data. For purposes of illustration and not of limitation in an instance in which the location information indicates that the apparatus 50 is in Spain, the ACA 97 may automatically associate/assign one or more add-ons to the profile of a user of the apparatus 50 in which the add-ons are associated with the Spanish language.

In an example embodiment, the network entity 100 may be a standalone device. In an alternative example embodiment, the network entity 100 may be embodied within the network device 90.

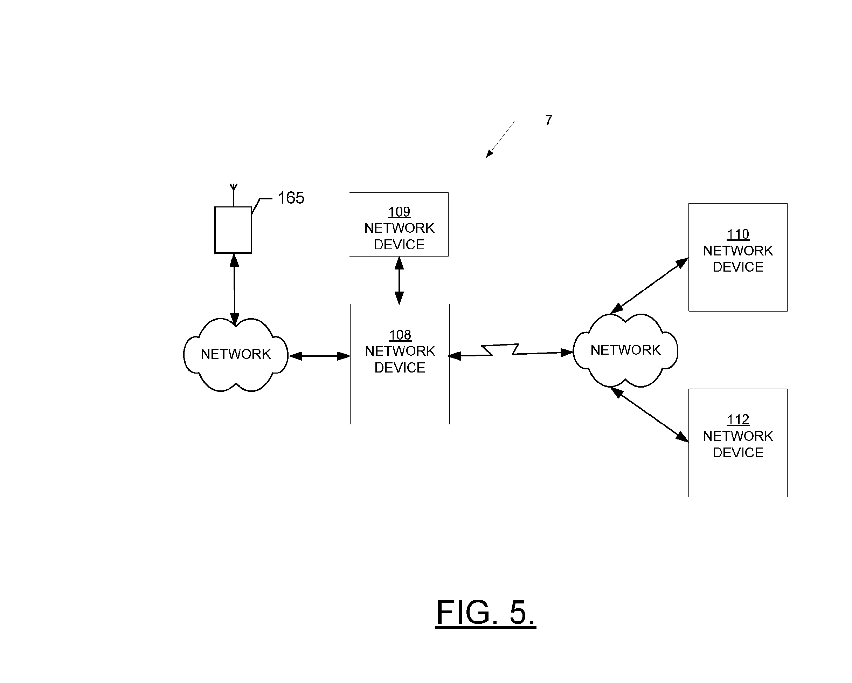

Referring now to FIG. 5, an example embodiment of a system is provided for customizing content for provision to a browser of an apparatus. The system 7 may include a communication device 165 (e.g., apparatus 50 (e.g., mobile terminal 10)) as well as a network device 108 (e.g., network device 90) and a network device 109 (e.g., network entity 100). The system 7 may also include network devices 110 and 112 (e.g., servers (e.g., third communication devices 25)) which may provide content (e.g., Web content) to the network device 108 in response to receipt of a request from the network device 108, as described more fully below.

Although the network device 109 is shown external to the network device 108 in FIG. 5, in an alternative example embodiment the network device 109 may be included in the network device 108. Additionally, although FIG. 5 shows one communication device 165, one network device 108, one network device 109, one network device 110 and one network device 112, it should be pointed out that the system 7 of FIG. 5 may include any suitable number of communication devices 165 and network devices 108, 109, 110 and 112 without departing from the spirit and scope of the invention.

In the example embodiment of FIG. 5, a browser (e.g., browser 75) of communication device 165 may request content from the network device 108 (e.g., a proxy server). The requested content may be Web content (e.g., a request for a Web page). In this example embodiment, presume, for purposes of illustration and not of limitation, that the Web content is a request for a Web page of a restaurant. In response to receipt of the request, the ACA (e.g., ACA 97) of the network device 108 may determine one or more add-ons associated with a profile of the user of the communication device 165. The ACA (e.g., ACA 97) of the network device 108 may communicate with the network device 109 (e.g., an add-on repository server) to determine the add-ons associated with the user, or may analyze profile data stored in a memory (e.g., memory 96) of the network device 108 to identify the add-ons associated with the user. In an alternative example embodiment, one or more add-ons associated with the user may be included in the request sent from the communication device 165 to the network device 108.

For purposes of illustration and not of limitation, presume that the ACA of the network device 108 determines that an address detection add-on is associated with the user of the communication device 165. It should be pointed out that content such as, for example, Web pages may utilize a Document Object Model (DOM). In response to determining the address detection add-on is associated with the user, the network device 108 may send a request for the content requested by the communication device 165 to a network device (e.g., network device 110 (e.g., a server)) via a network (e.g., the Internet). In this example embodiment, presume, for example, the network device 110 provides a DOM associated with a Web page for a restaurant to the network device 108. In response to receipt of the DOM associated with the Web page for a restaurant, the ACA of the network device 108 may execute the address detection add-on (e.g., a JavaScript file, cookie control information, HTTP header modification information, etc.) which may enable detection of one or more addresses on the Web page of the restaurant (e.g., the address location of the restaurant). In this regard, the ACA of the network device 108 may modify the DOM associated with the Web page of the restaurant by generating or wrapping the detected one or more addresses (e.g., the address location of the restaurant) in a link(s) to a mapping service (e.g., Nokia^{™} Maps), for example. The network device 108 may provide the modified DOM associated with the Web page of the restaurant and link associated with the address to the mapping service to the browser (e.g., browser 75) of the communication device 165. As such, the user of the communication device 165 may receive a modified DOM in response to the address detection add-on being executed externally by the ACA (e.g., ACA 97) of the network device 108 which modifies the requested content (e.g., Web content).

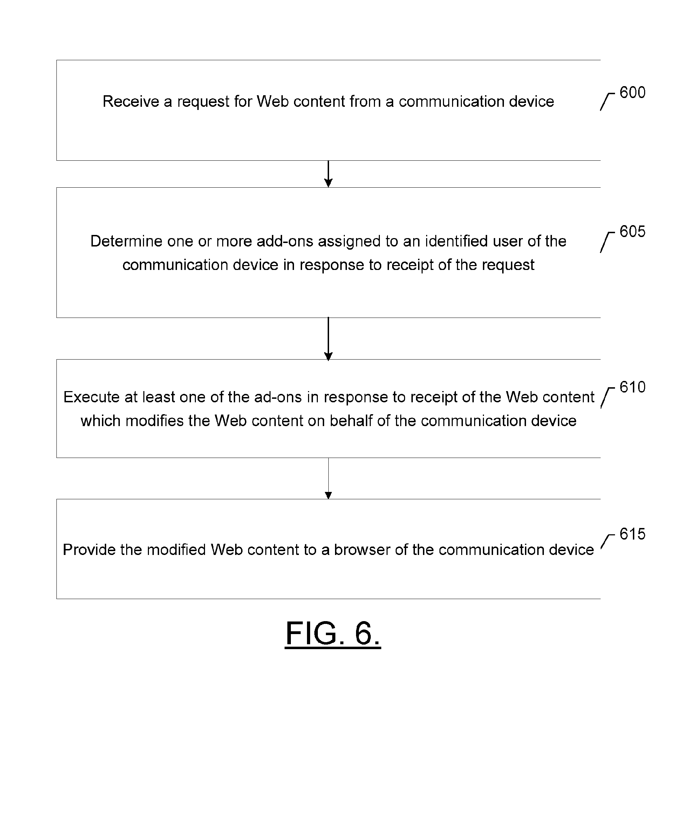

Referring now to FIG. 6, a flowchart of an example method for enabling customization of content provided to a browser of an apparatus is provided. At operation 600, an apparatus (e.g., network device 90 (e.g., network device 108)) may include means, such as the ACA 97, the processor 94 and/or the like for receiving a request for Web content (e.g., a Web page) from a communication device (e.g., apparatus 50 (e.g., communication device 165)). At operation 605, the apparatus (e.g., network device 90) may include means, such as the ACA 97, the processor 94 and/or the like for determining one or more add-ons assigned to an identified user of the communication device (e.g., apparatus 50) in response to receipt of the request. At operation 610, the apparatus (e.g., network device 90) may include means, such as the ACA 97, the processor 94 and/or the like for executing at least one of the add-ons in response to receipt of the Web content which modifies the Web content on behalf of the communication device (e.g., apparatus 50). At operation 615, the apparatus (e.g., network device 90) may include means, such as the ACA 97, the processor 94 and/or the like for providing the modified Web content to a browser (e.g., browser 75) of the communication device (e.g., apparatus 50).

It should be pointed out that FIG. 6 is a flowchart of a system, method and computer program product according to an example embodiment of the invention. It will be understood that each block of the flowchart, and combinations of blocks in the flowchart, can be implemented by various means, such as hardware, firmware, and/or a computer program product including one or more computer program instructions. For example, one or more of the procedures described above may be embodied by computer program instructions. In this regard, in an example embodiment, the computer program instructions which embody the procedures described above are stored by a memory device (e.g., memory device 76, memory 96, memory 106) and executed by a processor (e.g., processor 70, processor 94, processor 104, content customizer module 78, ACA 97). As will be appreciated, any such computer program instructions may be loaded onto a computer or other programmable apparatus (e.g., hardware) to produce a machine, such that the instructions which execute on the computer or other programmable apparatus cause the functions specified in the flowchart blocks to be implemented. In one embodiment, the computer program instructions are stored in a computer-readable memory that can direct a computer or other programmable apparatus to function in a particular manner, such that the instructions stored in the computer-readable memory produce an article of manufacture including instructions which implement the function(s) specified in the flowchart blocks. The computer program instructions may also be loaded onto a computer or other programmable apparatus to cause a series of operations to be performed on the computer or other programmable apparatus to produce a computer-implemented process such that the instructions which execute on the computer or other programmable apparatus implement the functions specified in the flowchart blocks.

Accordingly, blocks of the flowchart support combinations of means for performing the specified functions. It will also be understood that one or more blocks of the flowchart, and combinations of blocks in the flowchart, can be implemented by special purpose hardware-based computer systems which perform the specified functions, or combinations of special purpose hardware and computer instructions.

In an example embodiment, an apparatus for performing the method of FIG. 6 above may comprise a processor (e.g., the processor 70, the processor 94, processor 104, the content customizer module 78, the ACA 97) configured to perform some or each of the operations (600 - 615) described above. The processor may, for example, be configured to perform the operations (600 - 615) by performing hardware implemented logical functions, executing stored instructions, or executing algorithms for performing each of the operations. Alternatively, the apparatus may comprise means for performing each of the operations described above. In this regard, according to an example embodiment, examples of means for performing operations (600 - 615) may comprise, for example, the processor 94 (e.g., as means for performing any of the operations described above), the processor 70, the processor 104, the content customizer module 78, the ACA 97 and/or a device or circuitry for executing instructions or executing an algorithm for processing information as described above.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe exemplary embodiments in the context of certain exemplary combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A method comprising:
receiving a request for Web content from a communication device;
determining one or more add-ons assigned to an identified user of the communication device in response to receipt of the request;
executing, via a processor, at least one of the add-ons, in response to receipt of the Web content, which modifies the Web content on behalf of the communication device; and
enabling provision of the modified Web content to a browser of the communication device.

2. The method as claimed in claim 1, wherein the add-ons comprise information that adds additional functionality to items of Web data.

3. The method as claimed in claim 1, wherein the at least one add-on comprises information that adds additional functionality to the modified Web content in response to the executing of the at least one add-on.

4. The method as claimed in claim 1, wherein prior to the executing of the at least one add-on, the method further comprises:
receiving the Web content from a network entity in response to enabling transmission of a request for the Web content to the network entity, the Web content comprises a Web page.

5. The method as claimed in claim 1, wherein prior to receiving the request, the method further comprises:
receiving one or more indications identifying the add-ons that are selected by the user for execution with requested Web content; and
assigning the add-ons to a profile of the user.

6. The method as claimed in claim 1, wherein prior to receiving the request, the method further comprises:
receiving the add-ons from a network entity that stores a plurality of add-ons received by a plurality of devices on behalf of a plurality of users.

7. The method as claimed in claim 1, further comprising:
detecting that the add-ons are included in the request for the Web content.

8. The method as claimed in claim 5, further comprising:
identifying one or more additional add-ons associated with the user for execution of the requested Web content in response to detecting additional information of the request.

9. The method as claimed in claim 8, wherein the additional information comprises at least one of a current location of the communication device, a type of the communication device, a provider of communication services to the communication device, or data indicating one or more languages.

10. An apparatus comprising means for performing method as claimed in any of the claims 1 to 9.

11. A computer program product comprising at least one non-transitory computer-readable storage medium having computer-readable program code portions stored therein, the computer-readable program code portions comprising:
program code instructions configured to cause receipt of a request for Web content from a communication device;
program code instructions configured to determine one or more add-ons assigned to an identified user of the communication device in response to receipt of the request;
program code instructions configured to execute at least one of the add-ons, in response to receipt of the Web content, which modifies the Web content on behalf of the communication device; and
program code instructions configured to enable provision of the modified Web content to a browser of the communication device.

12. The computer program product as claimed in claim 19, wherein the add-ons comprise information that adds additional functionality to items of Web data.
